# NEUE EUROPÄISCHE PATENTSCHRIFT

(11) **EP 2 235 861 B2**
(45) Veröffentlichungstag und Bekanntmachung des Hinweises auf die Entscheidung über den Einspruch: **04.03.2015**
(45) Hinweis auf die Patenterteilung: 10.08.2011
(21) Anmeldenummer: 09703602.4
(22) Anmeldetag: 17.01.2009
(51) Int. Cl.: H04J 3/06, H04L 12/26, H04L 12/40

(54) **VERFAHREN UND VORRICHTUNG ZUM ÜBERTRAGEN VON DATEN IN EINEM NETZWERK**
METHOD AND DEVICE FOR TRANSMITTING DATA IN A NETWORK
PROCÉDÉ ET DISPOSITIF DE TRANSMISSION DE DONNÉES DANS UN RÉSEAU

(30) Priorität: 25.01.2008 DE 102008007672
(43) Veröffentlichungstag der Anmeldung: 06.10.2010
(73) Patentinhaber: Pilz GmbH & Co. KG, 73760 Ostfildern (DE)
(72) Erfinder: HOLZAEPFEL, Matthias, 70329 Stuttgart (DE); SPERRER, Reinhard, 73760 Ostfildern (DE); WOEHRLE, Stefan, 73760 Ostfildern (DE); WOHNHAAS, Klaus, 70736 Fellbach (DE)
(74) Vertreter: Witte, Weller & Partner Patentanwälte mbB
(86) Internationale Anmeldenummer: PCT/EP2009/000283
(87) Internationale Veröffentlichungsnummer: WO 2009/092548

(56) Entgegenhaltungen:
- EP-A2- 1 610 499
- DE-A1-102005 032 877
- Fachausschuss "Elektrotechnik": "Grundsatz für die Prüfung und Zertifizierung von "Bussystemen für die Übertragung sicherheitsrelevanter Nachrichten"" Hauptverband der gewerblichen Berufsgenossenschaften 31. Mai 2002 (2002-05-31), XP002522879 Gefunden im Internet: URL:http://www.bgete.de/bilder/pdf/gs-et-2 6_a05-2002.pdf> [gefunden am 2009-04-03] in der Anmeldung erwähnt

## Beschreibung

Die vorliegende Erfindung betrifft ein Verfahren zum Übertragen von Daten in einem Netzwerk mit einer Vielzahl von Teilnehmern, die zumindest einen Nachrichtensender und zumindest einen Nachrichtenempfänger beinhalten, wobei der zumindest eine Nachrichtensender eine Vielzahl von Nachrichten versendet, wobei der zumindest eine Nachrichtensender eine Vielzahl von Nachrichten empfängt, und wobei eine Laufzeit der Nachrichten in dem Netzwerk anhand von Zeiterwartungen überwacht wird.

Die Erfindung betrifft ferner eine Vorrichtung, insbesondere zum automatisierten Steuern einer Anlage, mit einem Netzwerk mit einer Vielzahl von Teilnehmern, die zumindest einen Nachrichtensender und zumindest einen Nachrichtenempfänger beinhalten, wobei der zumindest eine Nachrichtensender eine Vielzahl von Nachrichten versendet, wobei der zumindest eine Nachrichtenempfänger eine Vielzahl von Nachrichten empfängt, und wobei zumindest einer der Teilnehmer dazu ausgebildet ist, eine Laufzeit der Nachrichten in dem Netzwerk anhand von Zeiterwartungen zu überwachen.

Ein solches Verfahren und eine solche Vorrichtung sind beispielsweise aus DE 10 2005 032 877 A1 bekannt.

Diese Druckschrift betrifft ein Verfahren zur Zeitsynchronisation von Teilnehmern eines Netzwerks, das typischerweise Teil einer Vorrichtung zum automatisierten Steuern einer Anlage ist. Die Teilnehmer tauschen hier sicherheitsrelevante Daten aus, wobei sich der Begriff "sicherheitsrelevant" in diesem Fall auf die Betriebssicherheit der Anlage bezieht. Ein typischer Anwendungsfall ist die Übertragung einer Nachricht, die das Betätigen eines Not-Aus-Schalters signalisiert. Um die Betriebssicherheit zu gewährleisten, muss die Anlage auf eine solche Nachricht hin innerhalb einer definierten Zeitspanne abgeschaltet werden. Um das Einhalten dieser definierten Zeitspanne zu gewährleisten, ist es erforderlich, die Laufzeit der Nachrichten in dem Netzwerk zu überwachen. Die Laufzeit kann aufgrund von wechselndem Nachrichtenaufkommen, aufgrund von Störungen und aus anderen Gründen variieren. Während die Verzögerung von Nachrichten in einem Büronetzwerk keine gravierenden Folgen hat, abgesehen von einer möglicherweise lästigen Wartezeit, kann die Verzögerung von Nachrichten in einem Netzwerk, das zur sicherheitsrelevanten Steuerung einer Anlage verwendet wird, fatale Folgen haben, wenn beispielsweise ein gefährlicher Antrieb aufgrund der Verzögerung nicht rechtzeitig abgeschaltet wird.

Die Beherrschung von Nachrichtenverzögerungen ist eine Voraussetzung für die Zertifizierung eines Netzwerks, das für die Übertragung von sicherheitsrelevanten Nachrichten im Sinne der Normen EN 954-1, IEC 61508 und EN ISO 13849-1 zugelassen werden soll. Maßnahmen zur Beherrschung von Verzögerungen sind in dem Dokument "Prüfgrundsätze für Bussysteme für die Übertragung sicherheitsrelevanter Nachrichten" beschrieben, das unter der Bezeichnung GS-ET-26 vom Fachausschuss Elektrotechnik des Hauptverbandes der gewerblichen Berufsgenossenschaften in Deutschland herausgegeben ist. Nach diesem Dokument ist grundsätzlich eine Zeiterwartung (Time Out) erforderlich. Zeiterwartung bedeutet, dass der Empfänger den Empfang von Nachrichten innerhalb definierter Zeitintervalle erwartet und eine Fehlermeldung erzeugt, wenn die erwartete Nachricht nicht innerhalb des Zeitintervalls eintrifft. Die Zeiterwartung bzw. die Länge des Zeitintervalls muss allerdings eine gewisse Toleranzzeit beinhalten, damit nicht schon bei geringen, unproblematischen Schwankungen der Laufzeit ein Fehlersignal erzeugt wird.

Eine Zeiterwartung beim Nachrichtenempfänger ist für sich genommen jedoch nicht ausreichend, um Nachrichtenverzögerungen innerhalb eines Netzwerks zu beherrschen, wenn der Nachrichtenempfänger beim (rechtzeitigen) Eintreffen einer Nachricht nicht prüfen kann, wie aktuell diese Nachricht ist. Es ist denkbar, dass der Nachrichtenempfänger innerhalb seiner Zeiterwartung eine Nachricht empfängt, die aus einem sehr viel älteren Nachrichtenzyklus stammt und daher nicht als Ersatz für eine noch nicht empfangene aktuelle Nachricht dienen darf. Der Nachrichtenempfänger kann dies allein anhand seiner Zeiterwartung nicht erkennen.

In der Praxis gibt es daher zwei grundsätzliche Vorgehensweisen, um die Verzögerung von Nachrichten in einem Netzwerk zu beherrschen. Die erste Vorgehensweise verwendet eine zweite Zeiterwartung beim Nachrichtensender, indem der Nachrichtensender eine Bestätigungsnachricht (Acknowledge) innerhalb eines Zeitintervalls nach dem Versenden seiner Nachricht erwartet. Die Kombination von Bestätigung und Zeiterwartung ist beispielsweise bei den Kommunikationsnetzwerken PROFIBUS und PROFINET mit PROFIsafe der Firma Siemens, Deutschland, beim Kommunikationsnetzwerk EtherCAT der Firma Beckhoff, Deutschland, oder dem Kommunikationsnetzwerk SafetyBUS p von der vorliegenden Anmelderin realisiert.

Eine alternative Vorgehensweise beinhaltet die Verwendung von so genannten Zeitmarken (Time Stamps) in Ergänzung zu der Zeiterwartung auf Empfängerseite. In diesem Fall wird jede Sendenachricht mit einer Zeitmarke versehen, anhand der ein Nachrichtenempfänger erkennen kann, wann der Nachrichtensender die Nachricht versendet hat. Die Verwendung von Zeitmarken setzt allerdings voraus, dass die Uhren im Nachrichtensender und im Nachrichtenempfänger synchron laufen. Dementsprechend müssen alle Teilnehmer über Uhren verfügen, die vor der Kommunikation und in regelmäßigen Zeitintervallen synchronisiert werden.

Ein bekanntes Verfahren zur Zeitsynchronisierung ist in dem Standard IEEE-1588 beschrieben. Nach diesem Verfahren versendet ein Master-Teilnehmer mehrere Synchronisationsnachrichten, in denen Zeitmarken enthalten sind, die der Master-Teilnehmer anhand seiner eigenen Uhr bestimmt hat. Ein Slave-Teilnehmer kann anhand der Zeitmarken die Zeitdifferenz zwischen seiner eigenen Uhr und der Uhr des Master-Teilnehmers bestimmen. Diese Differenz enthält allerdings noch die Laufzeit der Synchronisationsnachrichten. Daher versendet der Slave-Teilnehmer anschließend eine Anfragenachricht an den Master-Teilnehmer, und er misst mit Hilfe seiner eigenen Uhr die Zeitspanne, bis er eine Antwortnachricht vom Master-Teilnehmer erhält. Der Slave-Teilnehmer bestimmt die Laufzeit der Nachrichten, indem er die gemessene Zeitspanne durch zwei teilt. Dann korrigiert der Slave-Teilnehmer seine Uhrzeit um die Zeitdifferenz und um die Laufzeit der Nachrichten. Beispielsweise verwendet das Kommunikationsnetzwerk DeviceNet der Firma Rockwell, USA, Zeitmarken und Zeitsynchronisierung.

Die Synchronisierung der Uhren ist aufwändig, da sie eine mehrfache Kommunikation zwischen dem Master-Teilnehmer und den Slave-Teilnehmern erfordert. Für sicherheitsrelevante Anwendungen muss die Synchronisation außerdem überwacht werden, was einen weiteren Aufwand darstellt. Darüber hinaus wird ein Teil der Übertragungskapazität des Netzwerks ständig für die Übertragung der Zeitmarken benötigt.

Die Verwendung von Zeiterwartungen auf Senderseite belastet das Netzwerk mit einer Vielzahl von Bestätigungsnachrichten. Auch in diesem Fall wird also die Übertragungskapazität des Netzwerks beeinträchtigt. Darüber hinaus erfordert dieses Verfahren, dass jeder Nachrichtensender seine Nachrichtenempfänger kennt, um auf die Bestätigungsnachrichten warten zu können. Folglich ist ein hoher Konfigurationsaufwand beim Einrichten des Netzwerks und beim Austausch, Hinzufügen oder Wegnehmen von Teilnehmern erforderlich.

Die eingangs genannte DE 10 2005 032 877 A1 beschreibt ein Verfahren zur Zeitsynchronisation von Teilnehmern eines Netzwerks, wobei die Nachrichtenempfänger die Zeitinformation von allen angeschlossenen Nachrichtensendern periodisch abfragen. Im Unterschied zu IEE 1588 wird die Zeitsynchronisation hier also von den einzelnen Nachrichtenempfängern initiiert. Auch wenn die Synchronisation auf diese Weise vereinfacht werden sollte, besteht weiterhin der Nachteil, dass alle Nachrichten mit Zeitmarken versehen sein müssen. Ferner fehlt hier eine sichere Überwachung der Zeitsynchronisation.

Vor diesem Hintergrund ist es eine Aufgabe der vorliegenden Erfindung, ein Verfahren und eine Vorrichtung der eingangs genannten Art anzugeben, um die Verzögerung von Nachrichten innerhalb eines Netzwerks auf möglichst einfache und effiziente Weise zu beherrschen. Insbesondere soll die Übertragungskapazität des Netzwerks möglichst wenig beeinträchtigt werden.

Diese Aufgabe wird nach einem Aspekt der Erfindung durch ein Verfahren der eingangs genannten Art gelöst, bei dem zumindest einer der Teilnehmer die Laufzeit der Nachrichten im Betrieb des Netzwerks innerhalb von definierten ersten Zeitintervallen wiederholt misst und die gemessene Laufzeit mit einem definierten Schwellenwert vergleicht, wobei der zumindest eine Teilnehmer ein Fehlersignal erzeugt, wenn die gemessene Laufzeit den definierten Schwellenwert überschreitet.

Nach einem weiteren Aspekt der Erfindung wird diese Aufgabe durch eine Vorrichtung der eingangs genannten Art gelöst, wobei der zumindest eine Teilnehmer außerdem dazu ausgebildet ist, die Laufzeit der Nachrichten im Betrieb des Netzwerks innerhalb von definierten ersten Zeitintervallen wiederholt zu messen und die gemessene Laufzeit mit einem definierten Schwellenwert zu vergleichen, und wobei der zumindest eine Teilnehmer ein Fehlersignal erzeugt, wenn die gemessene Laufzeit den definierten Schwellenwert überschreitet.

Die Aufgabe wird ferner durch ein Kommunikationsendgerät zum Übertragen von Daten in einem Netzwerk mit einer Vielzahl von Teilnehmern gelöst, mit einem Speichermedium, auf dem Programmcode gespeichert ist, der dazu ausgebildet ist, ein Verfahren der oben angegebenen Art auszuführen, wenn das Kommunikationsendgerät mit einem der Teilnehmer gekoppelt ist.

Das neue Verfahren und die neue Vorrichtung verwenden also Testmessungen, um zu prüfen, ob die Laufzeit der Nachrichten im Netzwerk unterhalb eines definierten Schwellenwerts liegt. Dabei kommt es nicht auf eine exakte Bestimmung der Laufzeiten an, solange gewährleistet ist, dass die gemessene Laufzeit nicht kürzer ist als die tatsächliche Laufzeit. Der Begriff "Messung" ist daher im Sinne einer Abschätzung oder Grenzwertbetrachtung zu verstehen, nicht als messtechnisch exakte Bestimmung der tatsächlichen Laufzeit. Andererseits deutet der Begriff "Messung" an, dass die Abschätzung hier anhand von aktuellen Werten erfolgt, die im Betrieb des Netzwerks wiederholt gemessen werden.

Bevorzugt erfolgt die Testmessung, indem der zumindest eine Teilnehmer eine Anforderungsnachricht an einen anderen Teilnehmer versendet und auf diese Weise eine Antwortnachricht anfordert. Der zumindest eine Teilnehmer misst die Zeitspanne, bis die Antwortnachricht eintrifft und schätzt daraus die maximale Laufzeit ab. Im Unterschied zu dem Verfahren nach IEEE 1588 wird diese Testmessung nicht für die Synchronisation von Uhren benötigt, sondern die gemessene Laufzeit wird mit einem Schwellenwert verglichen. Prinzipiell ist eine Synchronisation von Uhren natürlich trotzdem möglich, obwohl sie in bevorzugten Ausgestaltungen des neuen Verfahrens und der neuen Vorrichtung entfällt.

Mit Hilfe der Testmessung ist es möglich, die maximale tatsächliche Laufzeit der Nachrichten in dem Netzwerk abzuschätzen. Entgegen den bisherigen Annahmen genügt dies, um - in Ergänzung zu einer Zeiterwartung auf Empfängerseite - Nachrichtenverzögerungen in dem Netzwerk zu beherrschen. Ein starker, sprunghafter Anstieg der Laufzeit, der beispielsweise die Folge einer Leitungsunterbrechung sein kann, wird anhand der Zeiterwartung auf Empfängerseite erkannt. Problematisch ist daher in erster Linie die grundsätzliche Laufzeit einer Nachricht von einem Nachrichtensender zu dem Nachrichtenempfänger. Diese Laufzeit sollte beim Empfänger bekannt sein, um die Aktualität einer empfangenen Nachricht beurteilen zu können. Wie bereits erwähnt, kommt hier allerdings nicht auf den exakten Wert der tatsächlichen Laufzeit an, sondern es genügt, wenn der Empfänger davon ausgehen kann, dass die tatsächliche Laufzeit den Schwellenwert nicht übersteigt, so dass die empfangene Nachricht aktuell ist. Mit anderen Worten muss der Nachrichtenempfänger lediglich die Laufzeit bei Inbetriebnahme des Kommunikationsnetzwerkes (die sogenannte Initialverzögerung) kennen, um die Aktualität einer empfangenen Nachrichten beurteilen zu können.

Des Weiteren muss allerdings überwacht werden, ob sich die Initialverzögerung im Betrieb des Netzwerks schleichend verlängert, da andernfalls das Risiko besteht, dass der Nachrichtenempfänger veraltete Nachrichten verarbeitet. Ein schleichender Anstieg von Nachrichtenlaufzeiten lässt sich mit Hilfe von Testmessungen in vordefinierten Zeitintervallen überwachen. Daher genügt es, in Ergänzung zu der Zeiterwartung auf Empfängerseite Testmessungen der Nachrichtenlaufzeit innerhalb von definierten (ersten) Zeitintervallen durchzuführen. Die Länge dieser Zeitintervalle kann für ein bestimmtes Netzwerk entweder empirisch und/oder anhand von analytischen Überlegungen bestimmt werden. Kriterium ist, dass die definierten (ersten) Zeitintervalle maximal so lang sein dürfen, dass sich die Laufzeit während des Betriebs nicht über die maximal zulässige Laufzeit erhöhen kann, ohne dass dies anhand der vorhandenen Zeiterwartung auf Empfängerseite erkannt wird.

Das neue Verfahren und die neue Vorrichtung benötigen prinzipiell weder Zeitmarken in den Nachrichten noch eine Zeitsynchronisierung zwischen den Teilnehmern. Des Weiteren ist prinzipiell keine weitere Zeiterwartung auf Senderseite erforderlich und dementsprechend können Sendenachrichten versendet werden, ohne dass der Nachrichtensender auf eine Bestätigungsnachricht warten muss. Daher kann die Übertragungskapazität des Netzwerks effizienter für die Übertragung von Nutzdaten genutzt werden. Darüber hinaus ermöglichen das neue Verfahren und die neue Vorrichtung die Anwendung des Producer-Consumer-Prinzips, wonach ein Nachrichtensender seine Nachrichten allen "interessierten" Empfängern zur Verfügung stellt und alle Empfänger die für sie relevanten Nachrichten selbst auswählen. Dies ermöglicht den Betrieb des Netzwerks mit einem geringen Verwaltungsaufwand.

Insgesamt ermöglichen das neue Verfahren und die neue Vorrichtung eine einfache und effiziente Beherrschung von Nachrichtenverzögerungen in einem Kommunikationsnetzwerk, wobei die Übertragungskapazität des Netzwerks nur in geringem Umfang und durch gelegentliche Messnachrichten beeinträchtigt wird. Die oben genannte Aufgabe ist daher vollständig gelöst.

In einer bevorzugten Ausgestaltung der Erfindung versendet der Nachrichtensender die Nachrichten in definierten zweiten Zeitintervallen, wobei die ersten Zeitintervalle größer sind als die zweiten Zeitintervalle. Vorzugsweise versendet der Nachrichtensender die Nachrichten periodisch.

In dieser Ausgestaltung wird die Testmessung nur "gelegentlich" durchgeführt, d.h. Sendenachrichten mit Nutzdaten werden häufiger und in geringeren Zeitintervallen versendet als die Testmessungen. Diese Ausgestaltung ermöglicht eine noch effizientere Nutzung der Übertragungskapazität.

In einer weiteren Ausgestaltung variiert die Länge der ersten Zeitintervalle in Abhängigkeit von der gemessenen Laufzeit.

In dieser Ausgestaltung wird die Häufigkeit der Testmessungen in Abhängigkeit von der aktuell abgeschätzten Laufzeit bestimmt. Wenn die Laufzeit bereits relativ lang ist, muss die Testmessung in kürzeren Zeitintervallen durchgeführt werden, um ein Überschreiten der geforderten Reaktionszeit des Systems rechtzeitig zu erkennen. Ist die Laufzeit (insbesondere die Initialverzögerung) hingegen klein, genügt es, die Testmessungen in größeren Zeitintervallen durchzuführen. Diese Ausgestaltung hat den Vorteil, dass die Häufigkeit der Testmessungen an veränderte Umgebungsbedingungen angepasst wird. Die Übertragungskapazität des Netzwerks wird noch weniger beeinträchtigt.

In einer weiteren Ausgestaltung ist der zumindest eine Teilnehmer ein Nachrichtenempfänger.

In dieser Ausgestaltung wird die Testmessung von dem Nachrichtenempfänger durchgeführt. Diese Ausgestaltung ist von Vorteil, weil der Nachrichtenempfänger den Empfang der Sendenachrichten mit Hilfe seiner Zeiterwartung ohnehin überwacht. Daher kennt der Nachrichtenempfänger seine individuelle Timeouttoleranz. In vorteilhafter Weise wird die Häufigkeit der Testmessungen, d.h. die Länge der ersten Zeitintervalle, in Abhängigkeit dieser Timeouttoleranz bestimmt, indem die ersten Zeitintervalle umso kleiner gewählt werden, je größer die Timeouttoleranz ist. Ist die Timeouttoleranz nämlich groß, kann sich die Laufzeit der Nachrichten relativ schnell erhöhen, ohne dass dies anhand der Zeiterwartung erkannt wird. Ist die Timeouttoleranz hingegen klein, benötigt eine schleichende Zunahme der Laufzeit viele Kommunikationszyklen und es genügt, die Testmessungen in größeren Zeitintervallen durchzuführen. Da der Nachrichtenempfänger seine Timeouttoleranz kennt, kann er die Häufigkeit der Testmessungen mit geringem Verwaltungsaufwand optimal bestimmen.

In einer weiteren Ausgestaltung beinhaltet die Vielzahl von Teilnehmern eine Vielzahl von Nachrichtensendern, deren Nachrichten der Nachrichtenempfänger empfängt, wobei der Nachrichtenempfänger die Laufzeit der Nachrichten von der Vielzahl der Nachrichtensender misst und mit zugehörigen Schwellenwerten vergleicht.

In dieser Ausgestaltung führt der zumindest eine Teilnehmer Testmessungen in Bezug auf einen Großteil oder sogar in Bezug auf alle Nachrichtensender durch, von denen er Nachrichten empfängt. Diese Ausgestaltung ermöglicht eine weitere Optimierung der Übertragungskapazität bei Einhaltung von hohen Sicherheitsanforderungen, da die Häufigkeit der Testmessungen an die individuellen Nachrichtenlaufzeiten der einzelnen Nachrichten angepasst werden kann.

In einer weiteren Ausgestaltung misst jeder Nachrichtenempfänger die Laufzeit der von ihm empfangenen Nachrichten.

In dieser Ausgestaltung misst jeder Nachrichtenempfänger "seine" relevanten Laufzeiten. Vorzugsweise führt jeder Nachrichtenempfänger Testmessungen in Bezug auf alle Nachrichtensender durch, von denen er Nachrichten empfängt. Diese Ausgestaltung ermöglicht eine optimale Überwachung der Nachrichtenlaufzeiten in Bezug auf sämtliche Kommunikationspfade, die innerhalb des Netzwerks genutzt werden. Daher ermöglicht diese Ausgestaltung eine sehr hohe Sicherheit. Andererseits kann die Häufigkeit der Testmessungen an die individuellen Laufzeiten der einzelnen Kommunikationspfade angepasst werden, was eine sehr effiziente Ausnutzung der Übertragungskapazität ermöglicht.

In einer weiteren Ausgestaltung beinhaltet die Vielzahl von Teilnehmern eine Anzahl von Sensorgeräten, Aktorgeräten und Steuergeräten, die jeweils als Nachrichtenempfänger ausgebildet sind. Vorzugsweise sind die Geräte außerdem auch als Nachrichtensender ausgebildet, da auf diese Weise eine sehr flexible und effiziente Kommunikation nach dem Producer-Consumer-Prinzip möglich ist.

Die neue Überwachung der Nachrichtenlaufzeiten ist prinzipiell bei jeder Art von Kommunikationsnetzwerk möglich. Die Vorteile des neuen Verfahrens und der neuen Vorrichtung sind jedoch besonders deutlich, wenn das Netzwerk zur Kommunikation zwischen Geräten dient, die zur automatisierten Steuerung einer technischen Anlage dienen. Gerade bei solchen Anwendungen ist die Einhaltung von definierten Nachrichtenlaufzeiten von großer Bedeutung.

In einer weiteren Ausgestaltung besitzen die Sensorgeräte, Aktorgeräte und Steuergeräte einen als sicher definierten Zustand, der in Abhängigkeit von dem Fehlersignal eingenommen wird.

Ein sicherer Zustand im Sinne dieser Ausgestaltung führt dazu, dass die gesteuerte Anlage in einen gefahrlosen Zustand gebracht wird. Für ein Sensorgerät, das einen Not-Aus-Taster auswertet, ist der sichere Zustand beispielsweise ein Signal, das einen betätigten Not-Aus-Taster signalisiert. Für ein Aktorgerät ist der sichere Zustand der deaktivierte Ruhezustand. Für ein Steuergerät ist der sichere Zustand derjenige, der angeschlossene Aktorgeräte in deren sicheren Zustand überführt. Von Vorteil ist es, wenn die oben genannten Geräte ihren sicheren Zustand jeweils auch dann einnehmen, wenn die Zeiterwartung nicht erfüllt ist, d.h. wenn innerhalb der Zeiterwartung keine erwartete Sendenachricht empfangen wird.

Nach dieser Ausgestaltung nehmen die Geräte ihren sicheren Zustand ein, wenn sie anhand der Testmessungen feststellen, dass die Laufzeit den definierten Schwellenwert überschritten hat. Prinzipiell ist es möglich und sogar von Vorteil, wenn eine "gescheiterte" Testmessung zunächst wiederholt wird, bevor der sichere Zustand eingenommen wird. Dies erhöht die Verfügbarkeit der Anlage. Wichtig ist in diesem Fall allerdings, dass die Länge der ersten Zeitintervalle so bemessen ist, dass die Reaktionszeit des Systems auch nach einer "gescheiterten" Laufzeitmessung noch erhalten ist. Kriterium für die Erzeugung des Fehlersignals ist letztlich, dass innerhalb einer definierten Anzahl von Kommunikationszyklen zumindest eine erfolgreiche Testmessung gelingen muss, bei der die gemessene Laufzeit unterhalb des definierten Schwellenwertes liegt. Mit der vorliegenden Ausgestaltung kann ein Kommunikationsnetzwerk zur Übertragung von sicherheitsrelevanten Daten sehr effizient und mit geringem Verwaltungsaufwand realisiert werden.

In einer weiteren Ausgestaltung überwachen nur die Nachrichtenempfänger die Laufzeit der Nachrichten anhand von Zeiterwartungen.

In dieser Ausgestaltung wird auf eine Zeiterwartung auf Senderseite verzichtet. Dementsprechend benötigen die Nachrichtensender keine Bestätigungsnachrichten. Ein Verzicht auf Bestätigungsnachrichten ermöglicht eine sehr effiziente Nutzung der verfügbaren Übertragungskapazität.

In einer weiteren Ausgestaltung versendet der zumindest eine Nachrichtensender die Vielzahl von Nachrichten ohne Zeitmarken.

Auch diese Ausgestaltung trägt zur erhöhten Effizienz des neuen Verfahrens und der neuen Vorrichtung bei, weil die Übertragungskapazität nicht durch das Versenden von Zeitmarken beeinträchtigt wird. Darüber hinaus kann in dieser Ausgestaltung die aufwändige Zeitsynchronisierung zwischen den Teilnehmern entfallen.

In einer weiteren Ausgestaltung versendet der zumindest eine Nachrichtenempfänger periodisch so genannte Heartbeat-Nachrichten, um den anderen Teilnehmern des Netzwerks zu signalisieren, dass der zumindest eine Nachrichtenempfänger noch empfangsbereit ist, wobei die Heartbeat-Nachrichten eine Antwortanforderung beinhalten, und wobei die Laufzeit anhand der Heartbeat-Nachrichten und der Antwortnachrichten gemessen wird.

Periodisch versendete Heartbeat-Nachrichten sind in einem Producer-Consumer-Netzwerk von Vorteil, um den Nachrichtensendern mitzuteilen, dass die ursprünglich vorhandenen Nachrichtenempfänger noch "leben". Solche Heartbeat-Nachrichten können in wesentlich größeren Zeitintervallen versendet werden als beispielsweise Bestätigungsnachrichten, mit denen ein Nachrichtenempfänger jede empfangene Nachricht quittiert. Der Vorteil der vorliegenden Ausgestaltung liegt darin, dass die Testmessungen zum Überprüfen der Laufzeit an die Heartbeat-Nachrichten gekoppelt sind. Diese Ausgestaltung ermöglicht eine sehr effiziente Realisierung des neuen Verfahrens und der neuen Vorrichtung.

In einer weiteren Ausgestaltung ist das Netzwerk ein geschaltetes Ethernet-Netzwerk, wobei die Teilnehmer die Nachrichten unter Verwendung von Ethemet-Protokollen versenden und empfangen.

Das neue Verfahren und die neue Vorrichtung lassen sich sehr vorteilhaft bei einem geschalteten Ethernet-Netzwerk realisieren, weil ein solches Netzwerk prinzipiell eine sehr flexible Kommunikation zwischen den Teilnehmern ermöglicht, was allerdings zur Folge hat, dass die Laufzeit der Nachrichten nicht determiniert ist. Infolgedessen sind prinzipiell starke und unvorhersehbare Schwankungen der Laufzeit möglich. Mit dem neuen Verfahren und der neuen Vorrichtung lassen sich diese starken Laufzeitschwankungen eines Ethernet-Netzwerks einfach und sehr effizient beherrschen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine schematische Darstellung einer Vorrichtung, die nach dem neuen Verfahren arbeitet,
- Figur 2: eine schematische Darstellung zur Erläuterung eines Ausführungsbei- spiels des neuen Verfahrens, und
- Figur 3: eine vereinfachte Darstellung eines Teilnehmers mit einem Kommuni- kationsendgerät nach einem Ausführungsbeispiel der Erfindung.

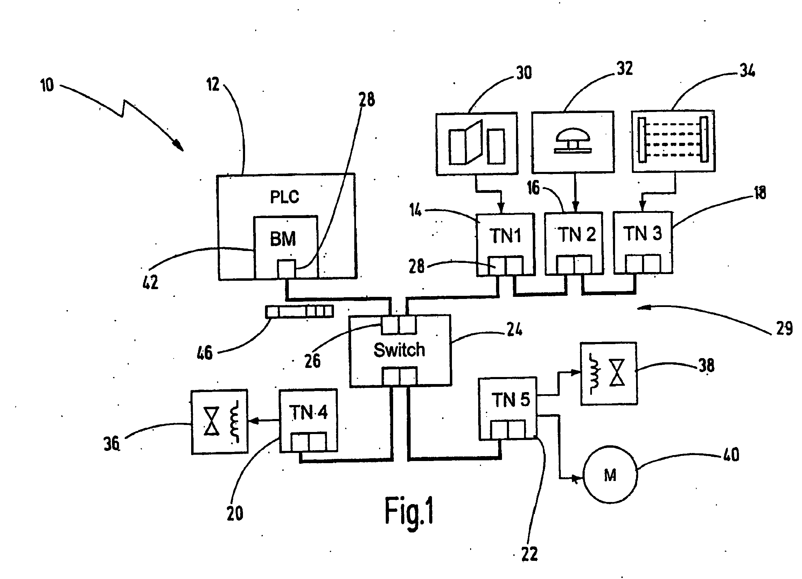

In Figur 1 ist ein Ausführungsbeispiel einer neuen Vorrichtung in seiner Gesamtheit mit der Bezugsziffer 10 bezeichnet.

Die Vorrichtung 10 besitzt hier ein Steuergerät 12, eine Anzahl von Sensorgeräten 14, 16, 18 und Aktorgeräten 20, 22. Mit der Bezugsziffer 24 ist ein so genannter Switch bezeichnet. Der Switch 24 besitzt eine Vielzahl von Anschlüssen 26. Jedes Gerät 12 bis 18 besitzt einen oder mehrere Anschlüsse 28. In dem dargestellten Ausführungsbeispiel ist das Steuergerät 12 mit seinem Anschluss 28 an einem ersten Anschluss 26 des Switch 24 angeschlossen. An weiteren Anschlüssen 26 des Switch sind das Sensorgerät 14 und die Aktorgeräte 20, 22 angeschlossen. Die weiteren Sensorgeräte 16, 18 sind in Reihe an einen weiteren Anschluss 28 des Sensorgerätes 14 angeschlossen. Das Steuergerät 12, die Sensorgeräte 14, 16, 18, die Aktorgeräte 20, 22 und der Switch 24 bilden hier ein Netzwerk 29, in dem Nachrichten unter Verwendung von Ethernet-Protokollen versendet und empfangen werden. Der Switch 24 symbolisiert, dass es sich hier um ein geschaltetes Ethernet-Netzwerk handelt, bei dem zwischen den einzelnen Teilnehmern jeweils eine Punkt-zu-Punkt-Verbindung besteht. Prinzipiell kann das neue Verfahren jedoch auch mit anderen Kommunikationsnetzwerken verwendet werden einschließlich solchen, bei denen die Teilnehmer drahtlos miteinander verbunden sind.

Das Sensorgerät 14 dient hier zum Überwachen einer Schutztür 30, mit der eine automatisiert arbeitende Anlage abgesichert wird. Das Sensorgerät 16 überwacht hier einen Not-Aus-Taster 32, das Sensorgerät 18 ein Lichtgitter 34. Es versteht sich, dass diese Sensorgeräte beispielhaft dargestellt sind. Prinzipiell könnte auch ein einzelnes Sensorgerät mehrere Sensoren überwachen. Des Weiteren sind die Sensorgeräte nicht auf die hier dargestellten Sensorgeräte beschränkt. Vorzugsweise beinhaltet die neue Vorrichtung jedoch zumindest einige Sensorgeräte, die als fehlersichere Sensorgeräte im Sinne der Kategorie 3 oder 4 der europäischen Norm EN 954-1 oder vergleichbarer Sicherheitsanforderungen ausgebildet sind. Derartige Sensorgeräte gewährleisten, dass auch bei Auftreten eines Funktionsfehlers in dem Sensorgerät kein gefährlicher Zustand der automatisierten Anlage auftritt.

Das Aktorgerät 20 dient hier beispielhaft zur Ansteuerung eines Magnetventils 36. Das Aktorgerät 22 steuert ein Magnetventil 38 und einen Motor 40. Die Magnetventile 36, 38 und der Motor 40 sind Beispiele für Aktoren, die in einer automatisiert gesteuerten Anlage zum Einsatz kommen. Es versteht sich, dass auch diese Darstellung nicht abschließend ist und beliebige andere Aktoren mit Hilfe des neuen Verfahrens und der neuen Vorrichtung angesteuert und überwacht werden können. Vorzugsweise sind zumindest einige Aktorgeräte 20, 22 fehlersichere Aktorgeräte im Sinne der Kategorien 3 oder 4 der europäischen Norm EN 954-1 oder vergleichbarer Sicherheitsanforderungen.

Das Steuergerät 12 ist hier eine speicherprogrammierbare Steuerung, die ebenfalls fehlersicher im Sinne der Kategorien 3 oder 4 der europäischen Norm EN 954-1 ausgebildet ist. In bevorzugten Ausführungsbeispielen steuert das Steuergerät 12 allerdings auch Standardfunktionen der automatisierten Anlage. Mit der Bezugsziffer 42 ist ein so genannter Busmaster bezeichnet, der in dem Steuergerät 12 angeordnet ist. Der Busmaster 42 ist ein Kommunikationsendgerät, über das das Steuergerät 12 an das Netzwerk 29 angeschlossen ist. Der Busmaster 42 erzeugt in bevorzugten Ausführungsbeispielen in regelmäßigen (zweiten) Zeitintervallen ein Nachrichtentelegramm 46 und versendet dieses an die Sensorgeräte 14, 16, 18 und Aktorgeräte 20, 22. In einem besonders bevorzugten Ausführungsbeispiel versendet das Steuergerät 12 das Nachrichtentelegramm 46 nur an das erste Sensorgerät 14, und dieses leitet das Nachrichtentelegramm 46 anschließend an das zweite Sensorgerät 16 weiter etc. Mit anderen Worten wird das Nachrichtentelegramm 46 von einem Netzwerkteilnehmer zum nächsten weitergeleitet. Wenn das Nachrichtentelegramm 46 alle Teilnehmer der Reihe nach durchlaufen hat, wird es in umgekehrter Reihenfolge der Teilnehmer wieder zum Steuergerät 12 zurückgesendet. Auf dem Hinweg kann jeder Netzwerkteilnehmer definierte Datenfelder des Nachrichtentelegramms 46 mit Sendedaten belegen. Auf dem Rückweg kann jeder Netzwerkteilnehmer Sendedaten von anderen Teilnehmern aus dem zurücklaufenden Nachrichtentelegramm 46 lesen.

Weitere Details dieses bevorzugten Verfahrens zur Kommunikation der Teilnehmer sind in WO 2006/069691 beschrieben, deren Inhalt hier durch Bezugnahme aufgenommen ist. Das neue Verfahren und die neue Vorrichtung sind jedoch nicht auf dieses spezielle Kommunikationsprotokoll beschränkt und sie können auch mit anderen Netzwerkprotokollen realisiert werden.

In dem bevorzugten Ausführungsbeispiel kann jedes Gerät sowohl Nachrichtensender als auch Nachrichtenempfänger sein, da die Nachrichten in zugewiesene Datenfelder des hinlaufenden Nachrichtentelegramms 46 abgelegt werden und aus den Datenfeldern des zurücklaufenden Nachrichtentelegramms gelesen werden. In anderen Ausführungsbeispielen kann die Rolle als Sender und Empfänger den einzelnen Netzwerkteilnehmern individuell zugewiesen sein.

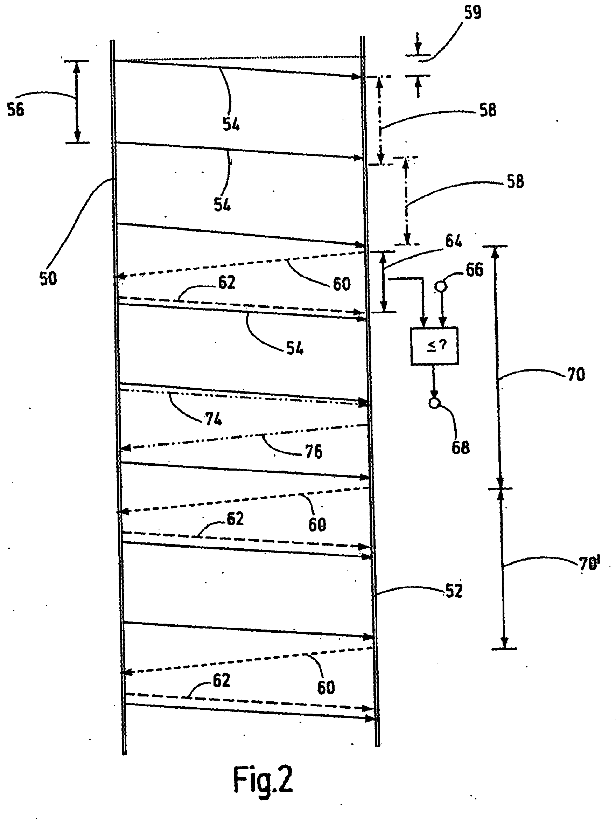

Figur 2 erläutert anhand einer schematischen Darstellung ein Ausführungsbeispiel des neuen Verfahrens. Mit der Bezugsziffer 50 ist eine Linie bezeichnet, die einen Nachrichtensender symbolisiert. Eine zweite Linie 52 symbolisiert einen Nachrichtenempfänger. Beide Linien symbolisieren zudem von oben nach unten einen zeitlichen Verlauf.

In dem dargestellten Ausführungsbeispiel versendet der Nachrichtensender 50 Sendenachrichten 54 in regelmäßigen Zeitintervallen 56. Beispielsweise ist der Nachrichtensender 50 hier das Sensorgerät 14 und die Sendenachricht 54 enthält eine Information, ob die Schutztür 30 geschlossen ist. Der Nachrichtenempfänger 52 ist hier beispielsweise das Steuergerät 12 oder das Aktorgerät 22. Prinzipiell können die Sendenachrichten 54 des Nachrichtensenders 50 von mehreren Empfängern gelesen werden (Producer-Consumer-Prinzip) .

Der Nachrichtenempfänger 52 besitzt eine Zeiterwartung, die in Figur 2 bei der Bezugsziffer 58 dargestellt ist. Die Zeiterwartung ist ein Zeitintervall, innerhalb dessen der Nachrichtenempfänger 52 den Empfang einer aktuellen Sendenachricht 54 erwartet. Die Zeiterwartung 58 ist etwas größer als das Zeitintervall 56, um geringe Laufzeitschwankungen innerhalb des Netzwerks 29 zuzulassen, ohne dass jedes Mal ein Fehlersignal erzeugt wird. Bei der Bezugsziffer ist die Laufzeit der Sendenachricht en 54 dargestellt.

In einem bevorzugten Ausführungsbeispiel versendet der Nachrichtenempfänger 52 seinerseits Heartbeat-Nachrichten 60, um dem Nachrichtensender 50 von Zeit zu Zeit zu signalisieren, dass der Nachrichtenempfänger 52 noch "lebt". In dem bevorzugten Ausführungsbeispiel beinhaltet die Heartbeat-Nachricht 60 außerdem eine Antwortanforderung, die den Nachrichtensender 50 veranlasst, eine Antwortnachricht 62 zu versenden. Die Antwortnachricht 62 kann eine separate Nachricht sein, oder sie kann zusammen mit der zyklisch wiederholten Sendenachricht 54 kombiniert sein. Der Nachrichtenempfänger 52 kann anhand der Zeitspanne 64 zwischen dem Absenden seiner Heartbeat-Nachricht 60 und dem Empfang der Antwortnachricht 62 abschätzen, wie lang die Laufzeit 59 der Nachrichten zwischen dem Sender 50 und dem Empfänger 52 ist. In einigen Ausführungsbeispielen kann der Nachrichtenempfänger 52 die Laufzeit abschätzen, indem er die Zeitspanne 64 durch zwei teilt, da die Zeitspanne 64 die kombinierte Laufzeit der Heartbeat-Nachricht 60 und der Antwortnachricht 62 beinhaltet. In anderen Ausführungsbeispielen kann der Nachrichtenempfänger 52 die Zeitspanne 64 als Abschätzung für die (maximale) Laufzeit der Nachrichten 54 verwenden.

In bevorzugten Ausführungsbeispielen vergleicht der Nachrichtenempfänger 52 die anhand der Zeitspanne 64 abgeschätzte Laufzeit mit einem Schwellenwert 66. Überschreitet die abgeschätzte Laufzeit den Schwellenwert 66, wird ein Fehlersignal 68 erzeugt, das in den bevorzugten Ausführungsbeispielen zur Folge hat, dass der Nachrichtenempfänger 52 seinen sicheren Zustand einnimmt. Für die Aktorgeräte 20, 22 bedeutet dies, dass die Aktoren 36, 38, 40 in ihren deaktivierten Ruhezustand gebracht werden. Für die Sensorgeräte 14, 16, 18 bedeutet dies, dass ein Öffnen der Schutztür 30, ein Betätigen des Not-Aus-Tasters 32 oder ein Durchbrechen des Lichtgitters 34 signalisiert wird. Liegt die gemessene Laufzeit hingegen unterhalb des Schwellenwerts 66, wird kein Fehlersignal 68 erzeugt.

Wie in Figur 2 dargestellt ist, versendet der Nachrichtenempfänger 52 Heartbeat-Nachrichten 60 in definierten Zeitintervallen 70, deren Länge hier allerdings in Abhängigkeit von der abgeschätzten Laufzeit variieren kann, wie dies in Figur 2 anhand der Bezugsziffern 70, 70' dargestellt ist.

Weitere Ausführungsbeispiele des neuen Verfahrens und der neuen Vorrichtung können beinhalten, dass auch der Nachrichtensender 50 die Laufzeit der Nachrichten in dem Netzwerk 29 mit Hilfe einer Messanforderungsnachricht 74 und einer Messantwortnachricht 76 bestimmt. In Abhängigkeit von der hier bestimmten Laufzeit kann ebenfalls ein Fehlersignal (hier nicht dargestellt) erzeugt werden.

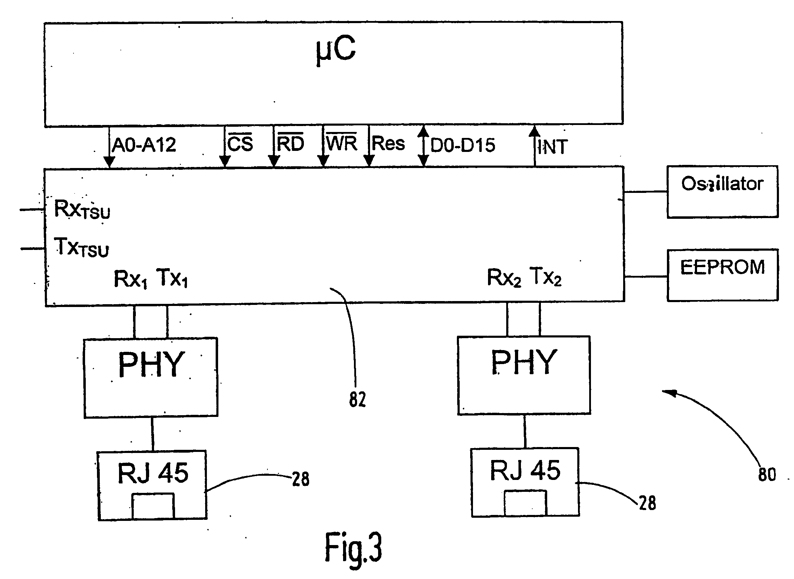

Figur 3 zeigt eine vereinfachte Darstellung eines Kommunikationsendgerätes 80 mit einem Speichermedium 82, das hier in Form eines ASIC ausgebildet ist. In dem Speichermedium 82 ist ein Programmcode gespeichert, der dazu ausgebildet ist, ein Verfahren der in Figur 2 dargestellten Art auszuführen, wenn das Kommunikationsendgerät 80 mit einem der Teilnehmer 12 bis 22 gekoppelt ist. Vorzugsweise ist das Kommunikationsendgerät 80 in jedem der Teilnehmer 12 bis 22 integriert.

## Patentansprüche

1. Verfahren zum Übertragen von Daten in einem Netzwerk (29) zur Kommunikation zwischen Geräten, die zur automatisierten Steuerung einer technischen Anlage dienen, wobei das Netzwerk (29) eine Vielzahl von Teilnehmern (12-22) aufweist, die zumindest einen Nachrichtensender (50) und zumindest einen Nachrichtenempfänger (52) beinhalten, wobei der zumindest eine Nachrichtensender (50) eine Vielzahl von Nachrichten (54) versendet, wobei der zumindest eine Nachrichtenempfänger (52) eine Vielzahl von Nachrichten (54) empfängt, wobei zumindest einer der Teilnehmer (52) innerhalb von definierten ersten Zeitintervallen (70, 70') eine Anforderungsnachricht (60) an einen anderen Teilnehmer (50) versendet und eine Antwortnachricht (62) empfängt, und wobei eine Laufzeit (59) der Nachrichten in dem Netzwerk (29) anhand von Zeiterwartungen (58) überwacht wird, **dadurch gekennzeichnet, dass** die Zeiterwartungen (58) Zeitintervalle sind, innerhalb derer der zumindest eine Nachrichtenempfänger (52) den Empfang einer aktuellen versendeten Nachricht (54) erwartet, und dass, in Ergänzung zu den Zeiterwartungen (58), der zumindest eine Teilnehmer (52) die Laufzeit der Nachrichten (54) im Betrieb des Netzwerks (29) wiederholt abschätzt, indem er die Anforderungsnachricht (60) an den anderen Teilnehmer (50) versendet und eine Zeitspanne (64) zwischen dem Absenden der Anforderungsnachricht (60) und dem Eintreffen der Antwortnachricht (62) misst, wobei der zumindest eine Teilnehmer (52) die gemessene Zeitspanne (64) mit einem definierten Schwellenwert (66) vergleicht, wobei der zumindest eine Teilnehmer (52) ein Fehlersignal (68) erzeugt, wenn die gemessene Zeitspanne (64) den definierten Schwellenwert (66) überschreitet, wobei der zumindest eine Nachrichtenempfänger (52) ein Aktorgerät (20, 22) zur Ansteuerung von Aktoren (36, 38, 40) ist, und wobei das Aktorgerät (20, 22) in Abhängigkeit von dem Fehlersignal (68) einen sicheren Zustand einnimmt, mit dem die Aktoren ( 36, 38, 40) in einen deaktivierten Ruhezustand gebracht werden, wobei der zumindest eine Teilnehmer (52) der zumindest eine Nachrichtenempfänger (52) ist.

2. Verfahren nach Anspruch 1, **dadurch gekennzeichnet, dass** der Nachrichtensender (50) die Nachrichten (54) in definierten zweiten Zeitintervallen (56) versendet, wobei die ersten Zeitintervalle (70, 70') größer als die zweiten Zeitintervalle (56) sind.

3. Verfahren nach Anspruch 1 oder 2, **dadurch gekennzeichnet, dass** die Länge der ersten Zeitintervalle (70, 70') in Abhängigkeit von der gemessenen Laufzeit (64) variiert.

4. Verfahren nach einem der Ansprüche 1 bis 3, **dadurch gekennzeichnet, dass** die Vielzahl von Teilnehmern (12-22) eine Vielzahl von Nachrichtensendern (50) beinhaltet, deren Nachrichten der Nachrichtenempfänger (52) empfängt, wobei der Nachrichtenempfänger (52) die Laufzeit der Nachrichten (54) von der Vielzahl von Nachrichtensendern (52) misst und mit zugehörigen Schwellenwerten (66) vergleicht.

5. Verfahren nach einem der Ansprüche 1 bis 4, **dadurch gekennzeichnet, dass** jeder Nachrichtenempfänger (52) die Laufzeit der von ihm empfangenen Nachrichten (54) misst.

6. Verfahren nach einem der Ansprüche 1 bis 5, **dadurch gekennzeichnet, dass** die Vielzahl von Teilnehmern (12-22) eine Anzahl von Sensorgeräten (14, 16, 18), Aktorgeräten (20, 22) und Steuergeräten (12) beinhaltet, die jeweils als Nachrichtenempfänger (52) ausgebildet sind.

7. Verfahren nach Anspruch 6, **dadurch gekennzeichnet, dass** die Sensorgeräte, Aktorgeräte und Steuergeräte (12-22) jeweils einen als sicher definierten Zustand besitzen, der in Abhängigkeit von dem Fehlersignal (68) eingenommen wird.

8. Verfahren nach einem der Ansprüche 1 bis 6, **dadurch gekennzeichnet, dass** nur die Nachrichtenempfänger (52) die Laufzeit der Nachrichten (54) anhand von Zeiterwartungen (58) überwachen.

9. Verfahren nach einem der Ansprüche 1 bis 8, **dadurch gekennzeichnet, dass** der zumindest eine Nachrichtensender (50) die Vielzahl von Nachrichten (54) ohne Zeitmarken versendet.

10. Verfahren nach einem der Ansprüche 1 bis 6, **dadurch gekennzeichnet, dass** der zumindest eine Nachrichtenempfänger wiederholt Heartbeat-Nachrichten (60) versendet, um den anderen Teilnehmern des Netzwerks (29) zu signalisieren, dass der zumindest eine Nachrichtenempfänger (52) noch empfangsbereit ist, wobei die Heartbeat-Nachrichten (60) eine Anwortanforderung beinhalten, und wobei die Laufzeit (64) anhand der Heartbeat-Nachrichten (60) und der Antwortnachrichten (62) gemessen wird.

11. Verfahren nach einem der Ansprüche 1 bis 10, **dadurch gekennzeichnet, dass** das Netzwerk (29) ein geschaltetes Ethernet-Netzwerk ist, wobei die Teilnehmer (12-22) die Nachrichten (54) unter Verwendung von Ethernet-Protokollen versenden und empfangen.

12. Vorrichtung zum automatisierten Steuern einer Anlage, mit einem Netzwerk (29) mit einer Vielzahl von Teilnehmern (12-22), die zumindest einen Nachrichtensender (50) und zumindest einen Nachrichtenempfänger (52) beinhalten, wobei der zumindest eine Nachrichtensender (50) eine Vielzahl von Nachrichten (54) versendet, wobei der zumindest eine Nachrichtenempfänger (52) eine Vielzahl von Nachrichten (54) empfängt, wobei zumindest ein Teilnehmer dazu ausgebildet ist, eine Laufzeit (59) der Nachrichten (54) in dem Netzwerk (29) anhand von Zeiterwartungen (58) zu überwachen, und wobei der zumindest eine Teilnehmer (52) dazu ausgebildet ist, innerhalb von definierten ersten Zeitintervallen (70, 70') eine Anforderungsnachricht (60) an einen anderen Teilnehmer (50) zu versenden und eine Antwortnachricht (62) zu empfangen, **dadurch gekennzeichnet, dass** die Zeiterwartungen (58) Zeitintervalle sind, innerhalb derer der zumindest eine Nachrichtenempfänger (52) den Empfang einer aktuellen versendeten Nachricht (54) erwartet, und dass, in Ergänzung zu den Zeiterwartungen (58), der zumindest eine Teilnehmer (52) dazu ausgebildet ist, die Laufzeit der Nachrichten (54) im Betrieb des Netzwerks (29) wiederholt abzuschätzen, indem er die Anforderungsnachricht (60) an den anderen Teilnehmer (50) versendet und eine Zeitspanne (64) zwischen dem Absenden der Anforderungsnachricht (60) und dem Eintreffen der Antwortnachricht (62) misst, und die gemessene Zeitspanne (64) mit einem definierten Schwellenwert (66) zu vergleichen, wobei der zumindest eine Teilnehmer (52) ein Fehlersignal (68) erzeugt, wenn die gemessene Zeitspanne (64) den definierten Schwellenwert (66) überschreitet, wobei der zumindest eine Nachrichtenempfänger (52) ein Aktorgerät (20, 22) zur Ansteuerung von Aktoren (36, 38, 40) ist, und wobei das Aktorgerät (20, 22) in Abhängigkeit von dem Fehlersignal (68) einen sicheren Zustand einnimmt, mit dem die Aktoren (36, 38, 40) in einen deaktivierten Ruhezustand gebracht werden, wobei der zumindest eine Teilnehmer (52) der zumindest eine Nachrichtenempfänger (52) ist.

13. Kommunikationsendgerät zum Übertragen von Daten in einem Netzwerk (29) mit einer Vielzahl von Teilnehmern (12-22), mit einem Speichermedium (82), auf dem Programmcode gespeichert ist, der dazu ausgebildet ist, ein Verfahren nach einem der Ansprüche 1 bis 11 auszuführen, wenn das Kommunikationsendgerät (80) mit einem der Teilnehmer (12-22) gekoppelt ist.

## Claims

1. A method for transmitting data in a network (29) for communication between devices which are used for automated control of a technical installation, wherein the network (29) has a plurality of subscribers (12-22), which include at least one message transmitter (50) and at least one message receiver (52), wherein the at least one message transmitter (50) sends a plurality of messages (54), wherein the at least one message receiver (52) receives a plurality of messages (54), wherein, within defined first time intervals (70, 70'), at least one of the subscribers (52) sends a request message (60) to another subscriber (50) and receives a response message (62), and wherein a delay time (59) of the messages in the network (29) is monitored on the basis of time outs (58), **characterized in that** the time outs are time intervals within which the at least one message receiver (52) expects the reception of a message (54) recently sent, and that, during operation of the network (29), the at least one subscriber (52) repeatedly estimates the delay time of the messages (54), in addition to the time outs, by sending the request message (60) to the other subscriber (50) and measuring a time period (64) between the sending of the request message (60) and the arrival of the response message (62), wherein the at least one subscriber (52) compares the measured time period (64) with a defined threshold value (66), wherein the at least one subscriber (52) produces an error signal (68) if the measured time period (64) exceeds the defined threshold value (66), wherein the at least one message receiver (52) is an actuator device (20, 22) for actuating actuators (36, 38, 40), and wherein the actuator device (20, 22) activates a safe state depending on the error signal (68), by which safe state the actuators (36, 38, 40) are brought to a deactivated rest state, wherein the at least one subscriber (52) is said at least one message receiver (52).

2. The method of claim 1, **characterized in that** the message transmitter (50) sends the messages (54) at defined second time intervals (56), wherein the first time intervals (70, 70') are greater than the second time intervals (56).

3. The method of claim 1 or 2, **characterized in that** the length of the first time intervals (70, 70') varies depending on the measured delay time (64).

4. The method of one of claims 1 to 3, **characterized in that** the plurality of subscribers (12-22) include a plurality of message transmitters (50) whose messages are received by the message receiver (52), wherein the message receiver (52) measures the delay times of the messages (54) from the plurality of message transmitters (52), and compares them with associated threshold values (66).

5. The method of one of claims 1 to 4, **characterized in that** each message receiver (52) measures the delay time of the messages (54) received by it.

6. The method of one of claims 1 to 5, **characterized in that** the plurality of subscribers (12-22) include a number of sensor devices (14, 16, 18), actuator devices (20, 22) and controllers (12), which are each in the form of message receivers (52).

7. The method of claim 6, **characterized in that** the sensor devices, actuator devices and controllers (12-22) each have a state which is defined as safe and which is activated depending on the error signal (68).

8. The method of one of claims 1 to 6, **characterized in that** only the message receivers (52) monitor the delay time of the messages (54) on the basis of the time outs (58).

9. The method of one of claims 1 to 8, **characterized in that** the at least one message transmitter (50) sends the plurality of messages (54) without time stamps.

10. The method of one of claims 1 to 6, **characterized in that** the at least one message receiver repeatedly sends heartbeat messages (60) in order to signal to the other subscribers in the network (29) that the at least one message receiver (52) is still ready to receive, wherein the heartbeat messages (60) include a response request, and wherein the delay time (64) is measured using the heartbeat messages (60) and the response messages (62).

11. The method of one of claims 1 to 10, **characterized in that** the network (29) is a switched Ethernet network, wherein the subscribers (12-22) send and receive the messages (54) using Ethernet protocols.

12. An apparatus for automatically controlling an installation, comprising a network (29) having a plurality of subscribers (12-22) which include at least one message transmitter (50) and at least one message receiver (52), wherein the at least one message transmitter (50) sends a plurality of messages (54), wherein the at least one message receiver (52) receives a plurality of messages (54), wherein at least one subscriber is designed to monitor a delay time (59) of the messages (54) in the network (29) on the basis of time outs (58), and wherein the at least one subscriber (52) is designed to send a request message (60) to another subscriber (50) and to receive a response message (62) within defined first time intervals (70, 70'), **characterized in that** the time outs (58) are time intervals within which the at least one message receiver (52) expects the reception of a message (54) recently sent, and that, in addition to the time outs (58), the at least one subscriber (52) is designed to repeatedly estimate the delay times of the messages (54) during operation of the network (29) by sending the request message (60) to the other subscriber (50) and measuring a time period (64) between the sending of the request message (60) and the arrival of the response message (62), and to compare the measured time period (64) with a defined threshold value (66), wherein the at least one subscriber (52) produces an error signal (68) if the measured time period (64) exceeds the defined threshold value (66), wherein the at least one message receiver (52) is an actuator device (20, 22) for actuating actuators (36, 38, 40), and wherein the actuator device (20, 22) activates a safe state depending on the error signal (68), by means of which safe state the actuators (36, 38, 40) are brought to a deactivated rest state, wherein the at least one subscriber (52) is said at least one message receiver (52).

13. A communication terminal for transmitting data in a network (29) having a plurality of subscribers (12-22), the communication terminal comprising a memory medium (82) where program code is stored, which program code is designed to carry out a method of one of claims 1 to 11 when the communication terminal (80) is coupled to one of the subscribers (12-22).

## Revendications

1. Procédé de transmission de données dans un réseau (29) pour les communications entre des dispositifs utilisées pour commander de manière automatisée une installation technique, dans lequel le réseau (29) comprend une pluralité de noeuds (12-22) qui comprennent au moins un émetteur de messages (50) et au moins un récepteur de messages (52), l'au moins un émetteur de messages (50) envoyant une pluralité de messages (54), l'au moins un récepteur de messages (52) recevant une pluralité de messages (54), au moins l'un des noeuds (52) envoyant un message de demande (60) à un autre noeud (50) pendant des premiers intervalles de temps définis (70, 70') et recevant un message de réponse (62), et le temps de parcours (59) des messages dans le réseau (29) étant surveillé sur la base de temps attendus (58), **caractérisé en ce que** les temps attendus (58) sont des intervalles de temps à l'intérieur desquels l'au moins un récepteur de messages (52) attend la réception d'un message (54) actuel envoyé, et **en ce qu'**en complément des temps attendus (58), l'au moins un noeud (52) estime de manière répétitive le temps de parcours des messages (54) pendant le fonctionnement du réseau (29), en envoyant le message de demande (60) à l'autre noeud (50) et en mesurant un intervalle de temps (64) entre l'envoi du message de demande (60) et l'arrivée du message de réponse (62), l'au moins un noeud (52) comparant l'intervalle de temps mesuré (64) à un seuil défini (66), l'au moins un noeud (52) générant un signal d'erreur (68) si l'intervalle de temps mesuré (64) dépasse le seuil défini (66), l'au moins un récepteur de messages (52) étant un dispositif actionneur (20, 22) destiné à commander des actionneurs (36, 38, 40), et le dispositif à actionneurs (20, 22) passant, en fonction du signal d'erreur (68), dans un état de sécurité dans lequel les actionneurs (36, 38, 40) sont mis dans un état de repos désactivé, l'au moins un noeud (52) étant l'au moins un récepteur de messages (52).

2. Procédé selon la revendication 1, **caractérisé en ce que** l'émetteur de messages (50) envoie les messages (54) pendant des deuxièmes intervalles de temps (56) définis, les premiers intervalles de temps (70, 70') étant plus longs que les deuxièmes intervalles de temps (56).

3. Procédé selon la revendication 1 ou 2, **caractérisé en ce que** la longueur des premiers intervalles de temps (70, 70') varie en fonction de la durée d'envoi mesurée (64).

4. Procédé selon l'une des revendications 1 à 3, **caractérisé en ce que** la pluralité de noeuds (12-22) comprend une pluralité d'émetteurs de messages (50) dont le récepteur de messages (52) reçoit les messages, le récepteur de messages (52) mesurant le temps de parcours des messages (54) de la pluralité d'émetteurs des messages (52) et les comparant à des seuils (66) respectifs.

5. Procédé selon l'une des revendications 1 à 4, **caractérisé en ce que** chaque récepteur de messages (52) mesure le temps de parcours des messages (54) qu'il reçoit.

6. Procédé selon l'une des revendications 1 à 5, **caractérisé en ce que** la pluralité de noeuds (12-22) comprend une pluralité de dispositifs détecteurs (14, 16, 18), de dispositifs à actionneurs (20, 22) et de dispositifs de commande (12), chacun d'entre eux étant réalisé sous la forme d'un récepteur de messages (52).

7. Procédé selon la revendication 6, **caractérisé en ce que** les dispositifs à capteurs, les dispositifs à actionneurs et les dispositifs de commande (12-22) possèdent chacun un état défini comme étant de sécurité auquel une transition est effectuée en fonction du signal d'erreur (68).

8. Procédé selon l'une des revendications 1 à 6, **caractérisé en ce que** seuls les récepteurs de messages (52) surveillent le temps de parcours des messages (54) sur la base de temps attendus (58).

9. Procédé selon l'une des revendications 1 à 8, **caractérisé en ce que** l'au moins un émetteur de messages (50) envoie la pluralité de messages (54) sans marqueurs temporels.

10. Procédé selon l'une des revendications 1 à 6, **caractérisé en ce que** l'au moins un récepteur de messages envoie de façon répétitive des messages de battement de coeur (60) à des fins de signalisation destinée aux autres noeuds du réseau (29), **en ce que** l'au moins un récepteur de messages (52) est encore prêt à recevoir, dans lequel les messages de battement de coeur (60) contiennent une demande de réponse, et dans lequel le temps de parcours (64) est mesuré au moyen des messages de battement de coeur (60) et des messages de réponse (62).

11. Procédé selon l'une des revendications 1 à 10, **caractérisé en ce que** le réseau (29) est un réseau Ethernet commuté, les noeuds (12-22) émettant et recevant les messages (54) à l'aide du protocole Ethernet.

12. Dispositif destiné à automatiser la commande d'une installation comprenant un réseau (29) ayant une pluralité de noeuds (12-22) qui comprennent au moins un émetteur de messages (50) et au moins un récepteur de messages (52), l'au moins un émetteur de messages (50) envoyant une pluralité de messages (54), l'au moins un récepteur de messages (52) recevant une pluralité de messages (54), l'au moins un noeud étant configuré pour surveiller un temps de parcours (59) des messages (54) dans le réseau (29) sur la base de temps d'attente (58), et l'au moins un noeud (52) étant configuré pour envoyer pendant des premiers intervalles de temps définis (70, 70') un message de demande (60) à un autre noeud (50) et pour recevoir un message de réponse (62), **caractérisé en ce que** les temps attendus (58) sont des intervalles de temps à l'intérieur desquels l'au moins un récepteur de messages (52) attend la réception d'un message (54) actuel envoyé, et **en ce qu'**en complément des temps attendus (58), l'au moins un noeud (52) est configuré pour évaluer de manière répétitive le temps de parcours des messages (54) pendant le fonctionnement du réseau (29), en envoyant le message de demande (60) aux autres noeuds (50) et en mesurant une période de temps (64) entre l'envoi du message de demande (60) et l'arrivée du message de réponse (62), et pour comparer la période de temps mesurée (64) à un seuil défini (66), l'au moins un noeud (52) générant un signal d'erreur (68) si la période de temps mesurée (64) dépasse le seuil défini (66), l'au moins un récepteur de messages (52) étant un dispositif à actionneurs (20, 22) destiné à commander des actionneurs (36, 38, 40), et le dispositif à actionneurs (20, 22) passant, en fonction du signal d'erreur (68), dans un état de sécurité dans lequel les actionneurs (36, 38, 40) sont mis dans un état de repos désactivé, l'au moins un noeud (52) étant l'au moins un récepteur de messages (52).

13. Dispositif de communication pour le transfert de données dans un réseau (29) comportant une pluralité de noeuds (12-22), un support de stockage (82) sur lequel est stocké un code de programme qui est conçu pour mettre en oeuvre un procédé selon l'une des revendications 1 à 11 lorsque le dispositif de communication (80) est relié au noeud (12-22).
